(19) **Europäisches Patentamt**

**European Patent Office**

**Office européen des brevets**

(11) **EP 1 717 650 A2**

(12) **EUROPÄISCHE PATENTANMELDUNG**

| | |
|---|---|
| (43) Veröffentlichungstag:<br>**02.11.2006 Patentblatt 2006/44** | (51) Int Cl.:<br>**G05B 13/02** (2006.01) |

(21) Anmeldenummer: **06004423.7**

(22) Anmeldetag: **04.03.2006**

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU**<br><br>(30) Priorität: **27.04.2005 DE 102005019518** | (71) Anmelder: **Volkswagen Aktiengesellschaft**<br>**38436 Wolfsburg (DE)**<br><br>(72) Erfinder:<br>• **Brose, Heino**<br>**39646 Oebisfelde (DE)**<br>• **Braitschnik, Peter**<br>**10777 Berlin (DE)**<br>• **Ligata, Edmir**<br>**13349 Berlin (DE)** |

(54) **Verfahren und Anordnung zum Auswerten von Ereignissen aus dem Betrieb eines Strassen-Kraftfahrzeuges**

(57) Die Erfindung betrifft ein Verfahren und eine Anordnung zum Auswerten von Ereignissen (A, B, C, D), die beim Betrieb eines Fahrzeuges, insbesondere eines Straßen-Kraftfahrzeuges, ermittelt werden. Es wird eine Vielzahl der Ereignisse (A, B, C, D) ermittelt. Ferner werden Zusatzinformationen ermittelt, die eine Zuordnung der Ereignisse (A, B, C, D) zu einem Zeitpunkt t und/oder Zeitraum des Auftretens des Ereignisses (A, B, C, D) ermöglichen. Den Ereignissen (A, B, C, D) wird aus den Zusatzinformationen der Zeitpunkt t und/oder der Zeitraum des Auftretens des Ereignisses (A, B, C, D) zugeordnet. Die Ereignisse (A, B, C, D) werden zu Ereignisclustern (oval umrahmte Ereignisse) gruppiert, wobei die Ereigniscluster jeweils ein oder mehrere Ereignisse (A, B, C, D) aufweisen, die zeitlich, oder bezüglich einer anderen in Zeitrichtung geordneten Skala, näher beieinander aufgetreten sind als andere Kombinationen von Ereignissen (A, B, C, D).

In einem weiteren Schritt können binäre Ergebnisvektoren gebildet werden, die die Gruppierung wiedergeben und eine automatische Weiterverarbeitung ermöglichen.

FIG. 7

**Beschreibung**

Die Erfindung betrifft ein Verfahren und eine Anordnung zum Auswerten von Ereignissen, die beim Betrieb eines Fahrzeuges, insbesondere eines Straßen-Kraftfahrzeuges, ermittelt werden.

Beispielsweise weisen heutige Straßen-Kraftfahrzeuge eine Vielzahl von Steuergeräten auf, die einzelne Fahrzeugfunktionen steuern und/oder regeln. Die Steuergeräte sind z. B. über einen CAN-Bus miteinander verbunden. Im Falle eines für eine Diagnose der Fahrzeugfunktionen relevanten Ereignisses, insbesondere eines Funktionsfehlers, wird ein Eintrag in einen Ereignisspeicher vorgenommen. Bei den Ereignissen handelt es sich z. B. darum, dass ein Sensor kein Signal ausgibt, an einem Aktor ein elektrischer Kurzschluss besteht oder eine Signalleitung zwischen einer Einrichtung (z. B. Aktor) und einem Steuergerät unterbrochen ist.

Insbesondere ist es bekannt, dass die im Fahrzeug integrierten Diagnoseeinrichtungen die Fahrzeugfunktionen überwachen und Abweichungen vom Sollverhalten protokollieren. Die so entstandenen Daten werden in den Werkstätten aus dem Fahrzeug ausgelesen und von Servicemitarbeitern mit Hilfe von Diagnoseanwendungen analysiert.

Die Erfindung betrifft insbesondere derartige Systeme mit einem Ereignisspeicher, wobei der Speicher auch aus mehreren Teil-Speichern bestehen kann. Dabei ist die Erfindung nicht auf eine Anordnung mit über CAN-Bus verbundenen Steuergeräten beschränkt, sondern betrifft vielmehr alle Systeme mit einer Vielzahl von Fahrzeugfunktionen, für die zur Diagnose des Betriebs (einschließlich Planung und Entwicklung von neuen Fahrzeugfunktionen oder Systemen) Ereignisse ermittelt und/oder gespeichert werden.

Die Anzahl und Verteilung von elektrischen und/oder elektronischen Einrichtungen und die damit verbundenen Fahrzeugfunktionen in Kraftfahrzeugen hat in den letzten Jahren deutlich zugenommen. Dadurch wurde die Komplexität bei der Diagnose deutlich erhöht. Bei einer möglichen Störung im System gestaltet sich die Suche nach der Ursache umso schwieriger und zeitaufwändiger. Da der im Fahrzeug verbaute Speicher sehr teuer ist, sind die im Fahrzeug vorhandenen Speicherressourcen begrenzt. In Folge dessen werden die Daten beim Speichern komprimiert. Dabei gehen wichtige Informationen, wie die Historie der Ereignisse, verloren und stehen somit bei der späteren Analyse (Diagnose) nicht mehr zur Verfügung.

Jede Diagnose in der Werkstatt wird als abgeschlossene Einheit betrachtet. Dies hat zur Folge, dass auf die Daten und das Wissen der vorhergehenden Diagnosen des gleichen Fahrzeugs oder Fahrzeuge der gleichen Fahrzeugserie nicht unmittelbar zurückgegriffen wird. Diese Daten werden nur durch die Erfahrungen des Servicemitarbeiters in die Durchführung der aktuellen Problemanalyse eingebracht.

Es ist eine Aufgabe der vorliegenden Erfindung, ein Verfahren und eine Anordnung anzugeben, mit denen sich der Diagnoseaufwand reduzieren lässt. Insbesondere soll der Aufwand für eine Behebung eines Fehlers in dem Fahrzeug-System reduziert werden können.

Der Erfindung liegt die Erkenntnis zu Grunde, dass mehrere Ereignisse, die beispielsweise in einem gemeinsamen Ereignisspeicher des Fahrzeugs oder einer mit dem Fahrzeug verbundenen Einrichtung gespeichert werden, die gleiche Ursache (insbesondere Fehlerursache) haben können. Für die Ermittlung der Zusammenhänge zwischen diesen gekoppelten Ereignissen wird vorgeschlagen, dass

- eine Vielzahl der Ereignisse ermittelt wird (insbesondere aus einem Ereignisspeicher abgefragt werden),
- Zusatzinformationen ermittelt werden (insbesondere aus dem Ereignisspeicher abgefragt werden), die eine Zuordnung der Ereignisse zu einem Zeitpunkt und/oder Zeitraum des Auftretens des Ereignisses ermöglichen,
- den Ereignissen aus den Zusatzinformationen der Zeitpunkt und/oder Zeitraum des Auftretens des Ereignisses zugeordnet wird,
- die Ereignisse zu Ereignisclustern gruppiert werden, wobei die Ereigniscluster jeweils ein oder mehrere Ereignisse aufweisen, die (gemäß der in den Zusatzinformationen enthaltenen Information) zeitlich, oder bezüglich einer anderen in Zeitrichtung geordneten Skala, näher beieinander aufgetreten sind als andere Kombinationen von Ereignissen.

Bei der Zeitachse, die der Auswertung der Zusatzinformationen zu Grunde liegt, kann es sich um eine nicht lineare Zeitachse handeln. Z. B. kann an Stelle der Zeit auch die Gesamt-Fahrstrecke eines Fahrzeugs verwendet werden (z. B. km-Stand), die das Fahrzeug seit Inbetriebnahme oder seit einem späteren Referenzereignis (z. B. Motorwechsel) zurückgelegt hat. Auch eine solche "km-Achse" oder eine andere Achse, die es ermöglicht, eine zeitliche Reihenfolge der aufgetretenen Ereignisse unter Bezugnahme auf die Achse zu erstellen, wird als Zeitachse bezeichnet. Eine solche Zeitachse ist mit der oben genannten "Skala" gemeint.

Durch die Gruppierung der Ereignisse in Ereigniscluster können wahrscheinliche Zusammenhänge zwischen dem Auftreten der Ereignisse in den einzelnen Ereignisclustern ermittelt werden. Dies vermittelt z. B. einem Servicetechniker und/oder einer Diagnosesoftware unmittelbare Informationen über die möglichen Zusammenhänge. Beispielsweise können die Ereigniscluster automatisch daraufhin ausgewertet werden, ob gleiche oder ähnliche Kombinationen von Ereignissen in mehreren der Ereigniscluster auftreten. Außerdem kann der genauere zeitliche Zusammenhang (insbesondere Zeitabstände des Auftretens und/oder zeitliche Reihenfolge des Auftretens) von Ereigniskombinationen analysiert werden, beispielsweise wiederum durch eine Diagnosesoftware.

Ein besonderer Vorteil der Erfindung liegt darin, dass bei der Gruppierung der Ereignisse in Ereigniscluster kein Wissen über technische Zusammenhänge der Fahrzeugfunktionen erforderlich ist. Die Gruppierung kann ausschließlich unter Berücksichtigung der Zusatzinformationen erfolgen.

Ein weiterer Vorteil der Erfindung liegt darin, dass in einem Ereignisspeicher abgespeicherten Informationen über die Ereignisse, die auf Grund von Datenkomprimierung keine genauen Detail-Informationen über den Zeitpunkt des Auftretens aller Ereignisse aufweisen, dennoch für die die Gruppierung der Ereignisse zu Ereignisclustern genutzt werden können. Hierauf wird noch anhand eines Ausführungsbeispiels unter Bezugnahme auf die beigefügten Figuren näher eingegangen. Selbst wenn der Zeitpunkt des Auftretens eines Ereignisses nicht mehr genau rekonstruiert werden kann, ermöglicht das Verfahren dennoch eine wahrscheinlich richtige Gruppierung bezüglich der Zeitachse. Insbesondere wenn eine Vielzahl der Ereigniscluster erzeugt wird, fallen Ungenauigkeiten bei der zeitlichen Rekonstruktion statistisch nicht mehr ins Gewicht. Eine entsprechende statistische Auswertung wird daher bei einer Weiterbildung des Verfahrens durchgeführt. Dabei kann z. B. ermittelt werden, dass bestimmte Kombinationen von Ereignissen mit signifikanter Häufigkeit in demselben Ereigniscluster auftreten.

Insbesondere wird die Gruppierung der Ereignisse zu Ereignisclustern so vorgenommen, dass der kleinste mögliche Gesamt-Zeitraum, der sämtliche Zeitpunkte und/oder Zeiträume der Ereignisse eines bestimmten Ereignisclusters enthält, nicht die Gesamt-Zeiträume der anderen Ereigniscluster oder einzelner Ereignisse überlappt. Diese Bedingung muss bei einer Ausgestaltung der Erfindung für alle Ereigniscluster erfüllt sein.

Insbesondere werden die Ereignisse so in die Ereigniscluster gruppiert, dass die zugeordneten Zeitpunkte und/oder Grenzen der zugeordneten Zeiträume aller Ereignisse, die in einem der Ereigniscluster gruppiert sind, nicht weiter als um eine vorgegebene Zeitspanne auseinander liegen. Dabei kann z. B. für jedes der potenziell in ein Ereigniscluster fallenden Ereignisse geprüft werden, ob der zugeordnete Zeitpunkt und/oder eine Grenze des zugeordneten Zeitraums in die Vergangenheit und/oder in die Zukunft um mehr als eine vorgegebene Zeitspanne auf der Zeitachse nach bzw. vor sämtlichen Zeitpunkten und/oder Grenzen liegt, die bereits in das Ereigniscluster gruppierten Ereignissen zugeordnet sind. Dabei kann die vorgegebene Zeitspanne für die Betrachtung der Vergangenheit von der vorgegebene Zeitspanne für die Betrachtung der Zukunft des Ereignisses abweichen und/oder individuell für bestimmte Arten von Ereignissen definiert sein. Vorzugsweise sind diese Zeitspannen jedoch für alle Ereignisse und sowohl für die Zukunft als auch für die Vergangenheit gleich.

Eine zusätzliche Bedingung für die Gruppierung kann die Wahrscheinlichkeit richtiger Zusammenhänge der Ereignisse erhöhen: Diese Bedingung lautet, dass dieselbe Art von Ereignissen nicht mehr als ein Mal in jedem der Ereignisclustern vorkommt. Unter derselben Art von Ereignissen wird verstanden, dass "dasselbe" Ereignis (z. B. ein bestimmter Fehler bei der Steuerung einer Fahrzeugfunktion oder die Feststellung, dass ein bestimmter Messwert nicht plausibel ist) mehrfach zeitlich nacheinander auftreten kann. Da das Ereignis aber nicht zu demselben Zeitpunkt mehrfach auftritt, ist es nicht dasselbe Ereignis, sondern gehört nur zu derselben Art von Ereignissen. Dieselbe Art von Ereignissen ist insbesondere dadurch definiert, dass die Ereignisse zwingend durch dieselbe Fehlerursache ausgelöst werden. Allerdings sind umgekehrt nicht alle auf Grund derselben Fehlerursache auftretenden Ereignisse von gleicher Art. Vielmehr kann gerade in komplexen Systemen eine Federursache mehrere verschiedenartige Ereignisse bewirken.

Beispielsweise kann ein Ereigniscluster beim Auftreten von mehr als einem Ereignis derselben Art in zwei oder mehrere Ereigniscluster aufgeteilt werden, so dass die zugeordneten Zeitpunkte und/oder Grenzen der zugeordneten Zeiträume aller Ereignisse jedes beliebigen der durch Aufteilung erhaltenen Ereigniscluster, in einer Zeitspanne liegen, die die Zeitspanne der anderen durch Aufteilung erhaltenen Ereigniscluster nicht überlappt.

Das Verfahren kann insbesondere durch eine im Fahrzeug angeordnete Gruppierungseinrichtung ("Fahrzeug-Modul") zur Bildung der Ereigniscluster und/oder durch eine außerhalb des Fahrzeugs ("Server-Modul", beispielsweise in einer Werkstatt) angeordnete Gruppierungseinrichtung zur Bildung der Ereigniscluster ausgeführt werden. Das Server-Modul erlaubt es insbesondere, die Ereigniscluster von verschiedenen Fahrzeugen einer Fahrzeugserie auszuwerten.

Das erfindungsgemäße Verfahren kann insbesondere durch Computer-Software und/oder -Hardware implementiert werden. Die Bildung der Ereigniscluster kann insbesondere in diesem Fall vollautomatisch erfolgen. Dementsprechend sind auch eine Software, eine Software/Hardware-Kombination und eine Hardware Teil der Erfindung, die ausgestaltet sind, das erfindungsgemäße Verfahren in einer seiner Ausgestaltungen auszuführen. Im Fall der Software (Computerprogramm) wird das Verfahren ausgeführt, wenn das Computerprogramm auf einem Computer oder Computer-Netzwerk abläuft. Bei Hardware oder einer Software-/Hardware-Kombination können z. B. speziell für die Ausführung des Verfahrens ausgestaltete Hardware-Komponenten wie ein FPGA (Field Programmable Gate Array) verwendet werden.

Programmcode-Mittel der Software können auf einem computerlesbaren Datenträger gespeichert sein. In diesem Fall gehört auch der Datenträger zum Umfang der Erfindung. Auf dem Datenträger kann eine Datenstruktur gespeichert sein, die nach einem Laden in einen Arbeits- und/oder Hauptspeicher eines Computers oder Computer-Netzwerkes das erfindungsgemäße Verfahren in einer seiner Ausgestaltungen ausführen kann.

Auch gehört zum Umfang der Erfindung ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Die Erfindung betrifft auch eine Anordnung zum Auswerten von Ereignissen, die beim Betrieb eines Fahrzeuges, insbesondere eines Straßen-Kraftfahrzeuges, ermittelt werden, wobei die Anordnung Folgendes aufweist:

-   eine Ermittlungseinrichtung, die ausgestaltet ist, eine Vielzahl der Ereignisse und Zusatzinformationen zu ermitteln, wobei die Zusatzinformationen eine Zuordnung der Ereignisse zu einem Zeitpunkt und/oder Zeitraum des Auftretens des Ereignisses ermöglichen,
-   eine Auswertungseinrichtung, die mit der Ermittlungseinrichtung verbunden ist und ausgestaltet ist, den ermittelten Ereignissen aus den Zusatzinformationen den Zeitpunkt und/oder den Zeitraum des Auftretens des Ereignisses zuzuordnen,
-   eine Gruppierungseinrichtung, die mit der Auswertungseinrichtung verbunden ist und die ausgestaltet ist, die Ereignisse zu Ereignisclustern zu gruppieren, wobei die Ereigniscluster jeweils ein oder mehrere Ereignisse aufweisen, die zeitlich näher beieinander aufgetreten sind als andere Kombinationen von Ereignissen.

Die Ermittlungseinrichtung kann mit einem (insbesondere in dem Fahrzeug angeordneten) Ereignisspeicher verbunden sein, in dem die Ereignisse und die Zusatzinformationen speicherbar bzw. gespeichert sind.

Im Folgenden wird die Erfindung anhand von Ausführungsbeispielen näher erläutert, die in den Figuren schematisch dargestellt sind. Die Erfindung ist jedoch nicht auf die Beispiele beschränkt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigen:

Fig. 1     eine Fahrzeugstruktur mit Steuergeräten, einem Daten-Bussystem und einem Ereignisspeicher,
Fig. 2     eine Struktur zur Gruppierung von Ereignissen, die gegebenenfalls mit Ausnahme des Ereignisspeicher durch Software implementiert werden kann,
Fig. 3     eine Ermittlung von Zeitpunkten, zu denen ein Ereignisses zum ersten Mal aufgetreten ist,
Fig. 4     eine Ermittlung von Zeiträumen, die Werten eines Verlernzählers zugeordnet sind,
Fig. 5     eine Festlegung bzw. Abschätzung des Zeitpunktes des letzten Auftretens des jeweiligen Ereignisses,
Fig. 6     eine Verteilung einer Mehrzahl von gleichartigen Ereignissen über einen Abschnitt der Zeitachse,
Fig. 7     eine Bildung von Ereignisclustern und die optionale Bildung von den Ereignisclustern entsprechenden binären Vektoren,
Fig. 8     in einem Ereignisspeicher gespeicherte Informationen,
Fig. 9     Schritte bei der Aufbereitung und Gruppierung von Ereignissen und
Fig. 10    gruppierte Ereignisse und ein zugehöriger Zeitstempel.

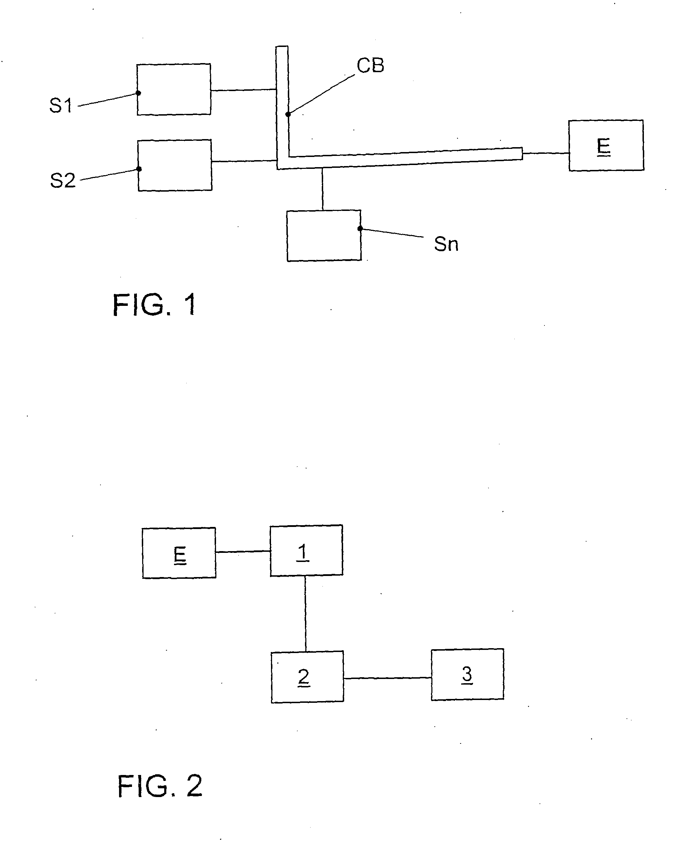

In dem im Folgenden dargestellten Ausführungsbeispiel sind Ausgangspunkt der Gruppierung von Ereignissen Einträge in Ereignisspeichern E. Die Einträge werden beispielsweise von Steuergeräten S1, S2, ... Sn bewirkt, die Fahrzeugfunktionen steuern. Die Steuergeräte sind z. B. über einen CAN-Bus CB mit dem jeweiligen Ereignisspeicher verbunden (Fig. 1). Bei dem Ereignisspeicher E kann es sich um ein System mit einer Vielzahl- von in dem Fahrzeug verteilten Speichern handeln, die jedoch gemeinsam und/oder nacheinander ausgelesen werden können.

Die in Fig. 2 dargestellte Anordnung weist eine Ermittlungseinrichtung 1 zur Ermittlung von Ereignissen und zugeordneten Zusatzinformatiorien auf. Die Ermittlungseinrichtung 1 ist mit einem Ereignisspeicher E verbunden. Wiederum mit der Ermittlungseinrichtung 1 ist eine Auswertungseinrichtung 2 zur Auswertung der Zusatzinformationen verbunden. Eine Gruppierungseinrichtung 3, die mit der Auswertungseinrichtung zwei und optional mit der Ermittlungseinrichtung 1 verbunden ist, gruppiert die Ereignisse unter Berücksichtigung der von der Auswertungseinrichtung 2 erhaltenen Auswertungsinformation in Ereigniscluster. Die Einrichtungen 1 bis 3 können durch Software und/oder Hardware implementiert sein.

In dem Ausführungsbeispiel werden Einträge in dem Ereignisspeicher verwendet, wobei der Ereignisspeicher das in der Tabelle 1 beschriebene Format aufweist. Im Folgenden wird oft nicht zwischen den Begriffen "Ereignis" und Ereignis-Art" unterschieden. Das "wiederholte Auftreten eines Ereignisses" bedeutet, dass wiederholt Ereignisse auftreten, die derselben Ereignis-Art angehören.

Tabelle 1: Aufbau des Ereignisspeichers

| Nr. | Bezeichnung | Beschreibung |
| --- | --- | --- |
| 1 | Ereignis | Ereignisort und Ereignisart |
| 2 | Km-Stand, Zeitsiempel 1.Auftreten | Zeitpunkt des ersten Auftretens |
| 3 | Häufigkeitszähler | Wie oft ist Ereignis aufgetreten |
| 4 | Verlernzähler | Stand des Verlernzählers beim letzten Auftreten des Ereignisses |

Dabei bezeichnet die Nummer (Nr.) den Speicherplatz eines Arrays von Daten, die einander zugeordnet sind. Für jedes Ereignis ist ein solches Array von Daten vorhanden. Die Speicherplätze sind belegt mit Informationen über das Ereignis (Nr. 1), insbesondere dem Ort des Auftretens des Ereignisses und der Ereignisart, dem Kilometerstand (Nr. 2), der gleichbedeutend mit oder stellvertretend für den Zeitpunkt des ersten Auftretens des Ereignisses ist, dem Wert eines Häufigkeitszählers (Nr. 3), der eine positive ganze Zahl ist und die Anzahl des Auftretens des Ereignisses wiedergibt, und dem Wert eines so genannten "Verlernzählers" und zwar dem Wert beim letzten Auftreten des Ereignisses vor dem Auslesen des Speichers.

Außerdem wird beim Auslesen des Speichers der aktuelle Wert des Verlernzählers abgefragt. Der Verlernzähler ist ein Zähler, dessen ganzzahliger Zählerwert jeweils um eins erhöht wird, wenn das Fahrzeug während des Betriebes einen definierten Betriebszyklus vollständig durchläuft.

Gemäß dem Format von Tabelle 1 wird nur beim ersten Auftreten des jeweiligen Ereignisses ein Zeitstempel (Zeitwert bzw. Km-Stand) gespeichert. Weitere Auftritte des Ereignisses werden nur durch eine Erhöhung des Häufigkeitszählers berücksichtigt. Dadurch gehen die Informationen über die Ereignishistorie verloren.

Hierin liegt ein Nachteil für bisher bekannte Diagnoseverfahren. Damit ein Service-mitarbeiter auf die Zusammenhänge zwischen den Einträgen im Ereignisspeicher schließen kann und somit auf die Ursache für diese, ist er auf die Unterstützung von verschiedenen Diagnoseanwendungen angewiesen. Da nicht alle aufgetretenen Ereignisse einen Eintrag in den Ereignisspeicher zu Folge haben, ergeben sich für m Ereignisse n Einträge (m, n sind jeweils eine positive ganze Zahl, wobei m größer als n ist) im Ereignisspeicher. Obwohl diese n Ereignisse zumindest teilweise die gleiche Ursache haben können und dadurch in einem Arbeitsschritt behandelbar wären (insbesondere in einem Arbeitsschritt einer Fehlerbehebung), werden von den bekannten Diagnoseanwendungen alle n Einträge einzeln untersucht. Daraus ergeben sich n Arbeitsschritte für n Einträge in den Ereignisspeichern, was zu einem erheblichen Zeitaufwand führt.

Bei dem hier beschriebenen Ausführungsbeispiel der Erfindung wird vorausgesetzt, dass das Diagnose-System und/oder die Anordnung zur Gruppierung der Ereignisse keine Kenntnis von der Art und den funktionalen Zusammenhängen der im Fahrzeug verbauten Komponenten hat. Daraus folgt, dass auch kein Wissen über die funktionalen hardware- oder vernetzungstechnischen Zusammenhänge der einzelnen Ereignisse verfügbar ist. Um die Ereignisse trotzdem in Beziehung setzen zu können, wird die erfindungsgemäße Gruppierung durchgeführt.

Das Verfahren wird durch ein Fahrzeug-Modul und ein Server-Modul ausgeführt verteilt. Das Server-Modul ist beispielsweise durch einen Fahrzeug-externen Computer realisiert. Ein zusätzliches Diagnosegerät visualisiert die Daten und/oder daraus abgeleiteten Informationen und übernimmt eine Vermittlerrolle zwischen dem Fahrzeug-Modul und dem Server-Modul. Durch das Diagnosegerät werden die Daten aus dem Fahrzeug-Modul abgefragt, angezeigt und zum Server-Modul weitergeleitet. Außerdem kann durch das Diagnosegerät das Fahrzeug-Modul konfiguriert werden und/oder die Abfrage des Server-Moduls vorgenommen werden.

Das Fahrzeug-Modul (das ausschließlich im Fahrzeug angeordnet ist) kann die erfindungsgemäße Gruppierung der Ereignisse eigenständig, ohne das Diagnosegerät und ohne das Server-Modul durchführen. Letztere können insbesondere der weiteren Verarbeitung der Daten und Diagnose dienen. Insofern kann die Gruppierung der Ereignisse als Vorverarbeitung bezeichnet werden. Der eigentliche Schritt der Gruppierung kann (nach einer Aufbereitung der in dem Ereignisspeicher gespeicherten Daten, auf die noch näher eingegangen wird) alternativ oder zumindest teilweise durch das Diagnosegeräte und/oder das Server-Modul durchgeführt werden.

Die erstellten Ereignisgruppen können insbesondere einer Analyse der Ereigniscluster durch ein Neuronales Netz unterzogen werden, welches die Ereignisgruppen als Eingabevektoren erfasst. Das Neuronale Netz lernt aus den ihr vorgelegten Eingabevektoren und untersucht diese bezüglich möglicher Zusammenhänge zwischen der Art und/oder dem Auftreten der einzelnen Ereignisse. Das Ergebnis des Neuronalen Netzes und somit des Fahrzeug-Moduls ist eine Wahrscheinlichkeitstabelle. Diese enthält Ereigniscluster und die entsprechenden Wahrscheinlichkeiten für einen Zusammenhang.

Insbesondere soll das Neuronale Netz oder eine andere Weiterverarbeitungsstufe zeitdiskrete Daten analysieren können, also Ereignisse, die jeweils einem Zeitpunkt oder kurzen Zeitraum des Auftretens zugeordnet sind. Die Daten im Ereignisspeicher des oben beschriebenen Formats gespeicherten Informationen weisen aber nicht für alle Ereignisse eine solche Zeit-Zuordnung auf. Die im Folgenden beschriebene besonders bevorzugte Form der Aufbereitung der Daten erfüllt diese Aufgabe. Von der Erfindung sind jedoch auch alternative Arten der Aufbereitung umfasst.

In einem ersten Schritt der Aufbereitung werden aus den Ereignisspeichern die Zeitstempel des ersten Auftretens der jeweiligen Ereignisse entnommen und können dann entsprechend der Zeitachse zugeordnet werden. Dieser Vorgang ist in Fig. 2 dargestellt.

Im Gegensatz zur Ermittlung des ersten Auftretens sind für die Ermittlung des jeweils letzten Auftretens der Ereignisse keine eindeutigen Zeitpunkte in den Ausgangsdaten des Ereignisspeicher angegeben. Um diese Zeitpunkte des letzten Auftretens ermitteln zu können, wird wie folgt beschrieben vorgegangen (Schritt 2):

Für alle Ereignisarten werden der kleinste Wert des Verlernzählers $V_{min}$ und der abgespeicherte Zeitstempel $t_{vmin}$ der zugehörigen Ereignisart ermittelt. Existieren in den Ereignisspeichern mehrere Ereignisarten mit demselben kleinsten Verlernzähler-Wert, so wird der jüngste (zeitlich späteste) Zeitstempel als $t_{vmin}$ ausgewählt. Beim Auslesen der Ereignisspeicher werden außerdem der Auslesezeitpunkt $t_a$ und der aktuelle Verlernzähler-Wert $v_a$ ermittelt.

Bevor die Zeitpunkte des letzten Auftretens berechnet (abgeschätzt) werden, werden zunächst die Breiten (Zeitintervalle) $dt_v$ der zeitlichen Gültigkeitsbereiche der einzelnen Verlernzähler-Werte über die folgende Gleichung 1 ermittelt. Diese Gültigkeitsbereiche werden um die Zeitpunkte $t_{vmin}$ und $t_a$ symmetrisch verteilt.

$$\text{Gleichung 1:} \qquad dt_v = (t_a - t_{vmin}) / (V_a - V_{min})$$

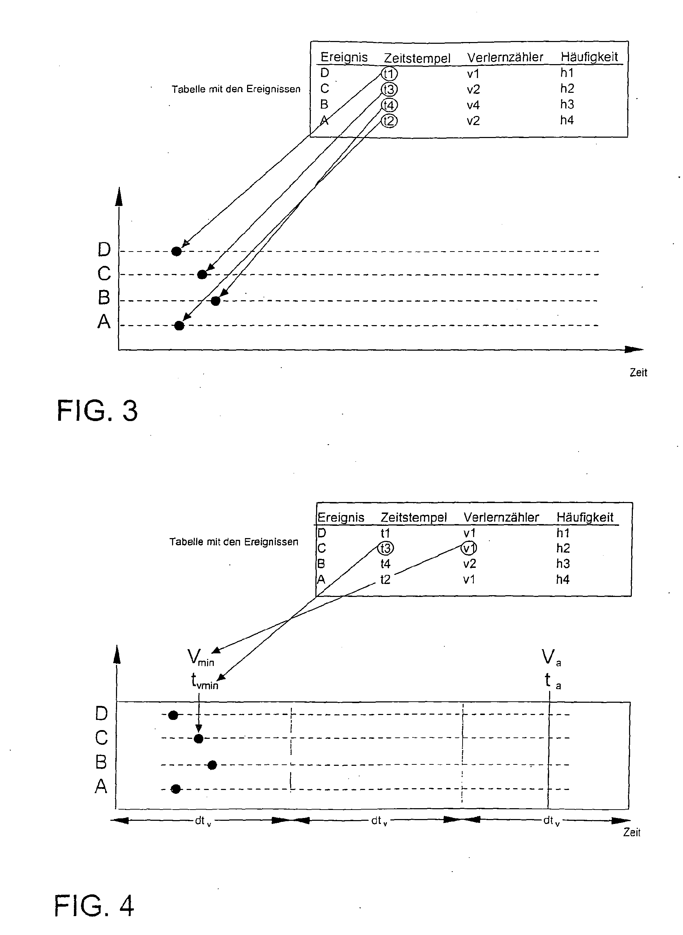

Diese Vorgehensweise wird durch Fig. 3 grafisch dargestellt. Dabei sind die Gültigkeitsbereiche durch insgesamt drei nebeneinander liegende rechteckige Bereiche dargestellt.

Bei der Verteilung der Gültigkeitsbereiche wird sichergestellt, dass der Gültigkeitsbereich jedes Verlernzählers $v_x$ nicht vor dem ersten Auftreten des Ereignisses mit dem Verlernzähler $v_x$ endet. Ist dies der Fall, so werden das Ende des Gültigkeitsbereiches des Verlernzählers $v_x$ und die Start- und Endzeitpunkte der Gültigkeitsbereiche der nachfolgenden Verlernzähler zu späteren Zeitpunkten (nach rechts) verschoben. Dabei repräsentiert x den Index des Verlernzählers und kann ganzzahlige Werte von 1 bis n annehmen, wobei n die Gesamtanzahl der Gültigkeitsbereiche bis zum Auslesen ist.

Nachdem die Gültigkeitsbereiche der Verlernzähler ermittelt und festgelegt sind, werden die Zeitpunkte des letzten Auftretens der Ereignisarten bestimmt. Dadurch, dass die Verteilung der Gültigkeitsbereiche der Verlernzähler und für jede Ereignisart die Werte des Verlernzählers (für das letzte Auftreten) bekannt sind, kann nun eine Zuordnung der letzten Auftritte der Ereignisse zu den Gültigkeitsbereichen hergestellt werden.

Um im folgenden Schritt 3 eine Gleichverteilung der Ereignisse über den entsprechenden Abschnitt der gewählten Zeitachse (z. B. normale, lineare Zeitachse oder Km-Stand-Skala) zu erreichen, werden die letzten Auftritte nicht beliebig in dem entsprechenden Gültigkeitsbereich festgelegt, sondern immer an der gleichen Stelle eines Gültigkeitsbereichs, z. B. am Anfang, in der Mitte oder am Ende des Gültigkeitsbereichs.

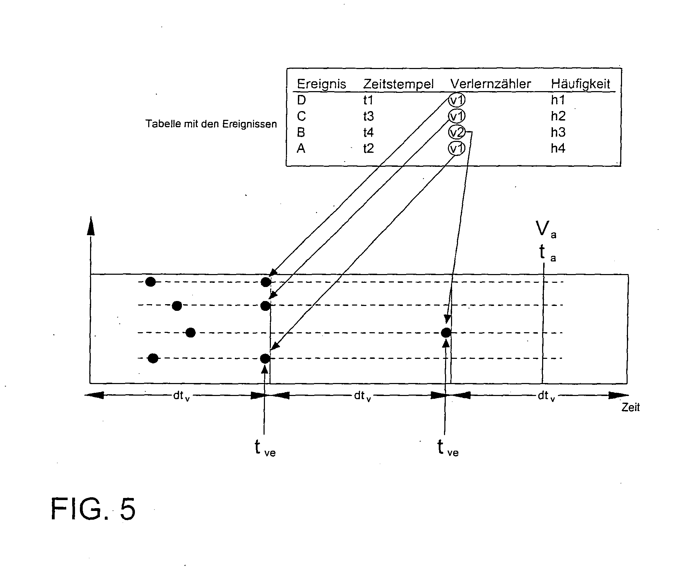

In dem in Fig. 5 dargestellten Fall wird das Ende des Gültigkeitsbereichs gewählt, d. h. der Zeitpunkt $t_{ve}$ des Endes als der Zeitpunkt des jeweiligen Ereignisses festgelegt. Diese Zeitpunkte können unter Verwendung des Auslesezeitpunkts $t_a$ und der aktuellen Verlernzähler-Werte $v_a$ berechnet werden.

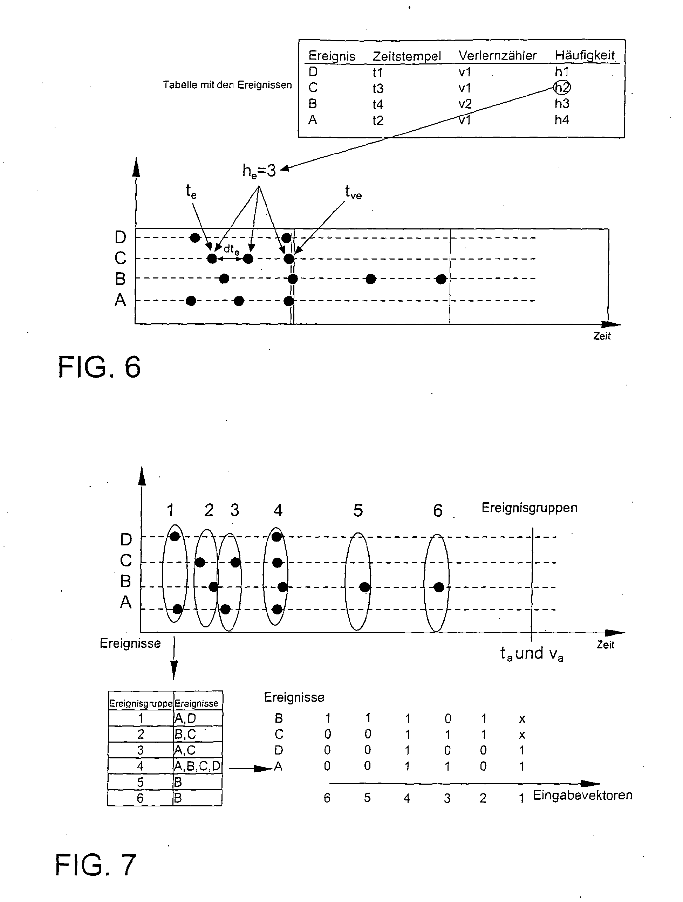

In dem Schritt 3 (siehe Fig. 6) wird anhand des Häufigkeitszählers die Anzahl des Auftretens eines jeden Ereignisses ermittelt. Zuvor wurden bereits die Zeitpunkte des ersten und des letzten Auftretens des Ereignisses ermittelt bzw. festgelegt. Ist die Häufigkeit des Ereignisses größer als 2 werden die weiteren Ereignisse derselben Art (z. B. Ereignis C) zwischen dem Zeitpunkt des ersten und letzten Auftretens des Ereignisses gleichmäßig verteilt. Der konstante Zeitabstand $d_{te}$ zwischen jeweils zwei aufeinander folgenden Ereignissen der gleichen Art ist dann durch folgende Gleichung 2 bestimmt:

$$\text{Gleichung 2:} \qquad d_{te} = (t_{ve} - t_e) / (h_e - 1),$$

wobei $h_e$ die Häufigkeit des Ereignisses ist, $t_e$ der Zeitpunkt des ersten Auftretens des Ereignisses ist und $t_{ve}$ der ermittelte Zeitpunkt des letzten Auftretens des Ereignisses ist.

In dem Schritt 4, der Gruppierungsphase, werden die zuvor auf die Zeitachse bezogenen Ereignisse in Gruppen zusammengefasst. Dies geschieht nach folgenden Regeln:

1. Es wird das Auftreten jedes Ereignisses bezüglich einer Gruppierung um Zweck der Einteilung in die Ereigniscluster untersucht.
2. Ereignisciuster dürfen sich wiederholen.

3. Ein bestimmtes Ereignis Y darf nur einmal in einem bestimmten Ereigniscluster X vorkommen.

4. Aus der Sicht des aktuell zu untersuchenden Ereignisses Y dürfen die zugeordneten Zeitpunkte aller potenziellen Ereignisse desselben Clusters (z. B. alle Ereignisse, die vorläufig bereits in das Cluster gruppiert wurden oder für eine Gruppierung in Frage kommen) nicht weiter als eine Zeitspanne t1 in die Vergangenheit und nicht weiter als eine Zeitspanne t2 in die Zukunft entfernt sein, um zu demselben Cluster zu gehören.

Als Folge dieser Regeln entstehen im Ausführungsbeispiel die in Fig. 7 mit jeweils einer ovalen Umfangslinie umrahmten sechs Cluster ("Ereignisgruppen"), die jeweils zwischen einem Ereignis und fünf Ereignissen aufweisen. Die Cluster sind im oberen Figurenteil mit den Ordnungsnummern 1 bis 6 bezeichnet.

Der linke untere Figurenteil stellt nochmals die als Ergebnis der Gruppierung erhaltenen Ereignisgruppen und die zugeordneten Ereignisse bzw. Ereignisarten dar. In der linken Spalte sind von oben nach unten die Ordnungsnummern der Ereignisse aufgetragen. In der rechten Spalte sind die in der jeweiligen Ereignisgruppe aufgetretenen Ereignisarten eingetragen.

Die so erstellten Ereignisgruppen können in einem optionalen weiteren Schritt zu binären Vektoren verarbeitet werden. Anhand des Beispiels in Fig. 7, rechter unterer Figurenteil wird der Schritt erklärt:

Jedes Ereigniscluster wird durch einen binären Vektor dargestellt (in der Figur als vertikaler Vektor dargestellt, der in jeder Zeile den Wert "0" oder "1" aufweist). Jedes Ereignis hat eine definierte Position in den binären Vektoren. Im Beispiel haben die Positionen der Ereignisse im Vektor die Reihenfolge B C D A. Falls das Ereignis in der Ereignisgruppe vorhanden ist, wird eine 1 an der Position des Ereignisses im binären Vektor eingetragen. Falls das Ereignis nicht in der Ereignisgruppe vorhanden ist, wird eine 0 an der Position des Ereignisses im binären Vektor eingetragen.

Da die Anzahl der im Fahrzeug auftretenden unterschiedlichen Arten von Ereignissen nicht im Vorhinein bestimmt werden kann, muss das Format (Anzahl der binären Elemente) des binären Vektors mit dem ersten Auftreten einer Art von Ereignissen erweitert werden oder erst nach der Feststellung erstellt werden, welche Ereignisarten aufgetreten sind.

Die Erweiterung des Vektors ist in Fig. 7 am Unterschied zwischen dem Vektor mit der Ordnungsnummem 1 und dem Vektor mit der Ordnungsnummern 2 zu erkennen. Vektor 1 weist nur zwei Elemente auf, die den Ereignissen D und A zugeordnet sind. Daher ist bei den noch nicht aufgetretenen Ereignissen B und C ein "x" für "nicht definiert" eingetragen. In Vektor 2 kommen jedoch die Ereignisse B und C vor. Daher weist dieser Vektor bereits vier Elemente auf.

Die auf diese Weise durch die Aufbereitung erzeugten binären Vektoren können als Eingabevektoren in das Neuronale Netz verwendet werden.

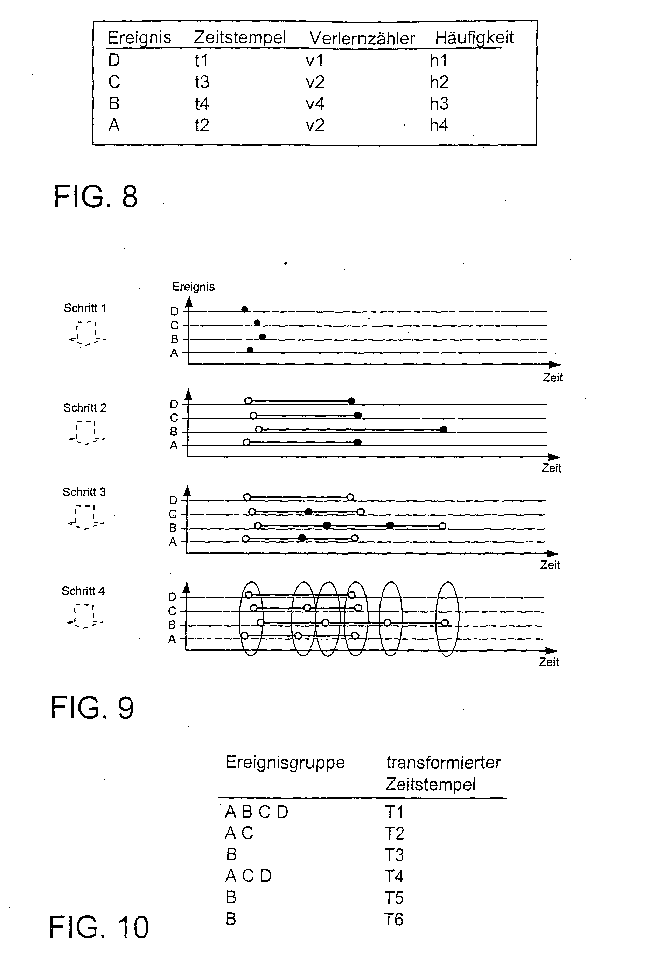

Ein weiteres Beispiel für die erfindungsgemäße Aufbereitung und Gruppierung von Ereignissen in einem Fahrzeug ist in den Figuren 8 bis 10 dargestellt.

Fig. 8 zeigt die in einem Ereignisspeicher oder einer Kombination von Ereignisspeichern gespeicherten Informationen. Beispielsweise werden verschiedene Ereignisspeicher wiederholt, insbesondere zyklisch nacheinander, ausgelesen. Dabei kann jeder der Ereignisspeicher einem Steuergerät des Fahrzeugs zugeordnet sein.

In der ersten Spalte der Tabelle gemäß Fig. 8 sind wiederum vier verschiedene Arten von Ereignissen mit einem Kennbuchstaben A, B, C, D bezeichnet. Im Allgemeinen können hier beliebig viele verschiedenartige Ereignisse eingetragen sein, insbesondere so viele verschiedenartige Ereignisse wie in dem Fahrzeug während einer Betriebsphase (z. B. zwischen zwei routinemäßigen Werkstattbesuchen) vorgekommen sind oder so viele wie bei einer Diagnose ausgelesen werden.

In der zweiten Spalte ist wiederum der Zeitstempel (z. B. ein Zeitwert oder ein Kilometerstand) des ersten Auftretens der Ereignisart eingetragen.

In der dritten Spalte ist der Wert eines Zählers, z. B. des so genannten "Verlernzählers" (s. o.) eingetragen, der verwendet werden kann, um das letzte Auftreten der Ereignisart zu ermitteln oder abzuschätzen (z. B. wie oben beschriebenen abzuschätzen).

In der vierten Spalte ist die Gesamt-Häufigkeit des Auftretens der Ereignisart eingetragen.

Die Tabelle dient lediglich der Veranschaulichung der erhältlichen Informationen. Die Informationen müssen nicht auf diese Art dargestellt oder gar visualisiert werden. Vielmehr kann die Verknüpfung zwischen der Ereignisart und den zugeordneten Informationen (z. B. Zeitstempel, Verlernzähler-Wert und Häufigkeit) auf jede andere mögliche Weise hergestellt werden, beispielsweise durch Software, in der ein entsprechendes Daten-Array definiert ist.

Außerdem können bei alternativen Ausgestaltungen andere Informationen zu der jeweiligen Ereignisart abgespeichert sein, als die in Fig. 8 dargestellten. Zum Beispiel könnte unmittelbar das mittlere Zeitintervall zwischen den einzelnen Auftrittszeitpunkten der Ereignisart abgespeichert sein. In diesem Fall könnte auf den Verlernzähler-Wert und die Häufigkeit verzichtet werden. Die Häufigkeit könnte im Nachhinein wiederum ermittelt werden, wenn das Ende des Beobachtungszeitraums erreicht ist darauf z. B. beim Auslesen der Daten. Auch ist es denkbar, wenn Datenspeicher-Kapazität im Fahrzeug günstiger wird und daher eine größere Kapazität zur Verfügung steht, den Zeitstempel jedes Auftretens eines Ereignisses abzuspeichern.

In Fig. 9 sind vier Schritte der Aufbereitung und Gruppierung von Ereignissen, z. B. der Ereignisse gemäß Fig.

8 dargestellt. Jeder Schritt entspricht einem Diagramm, auf dessen horizontaler Achse die Zeit oder eine entsprechende Größe (wie Kilometerstand) des Auftretens der Ereignisse aufgetragen ist und auf dessen vertikaler Achse die einzelnen vorkommenden Ereignisarten aufgetragen sind. Die aufgetretenen Ereignisse sind durch einen Kreis dargestellt.

In Schritt 1 wird für jede Ereignisart der Zeitpunkt des ersten Auftretens der Ereignisart ermittelt. In Schritt 2, der mit Schritt 1 vertauscht werden kann oder gleichzeitig ausgeführt werden kann, wird für jede Ereignisart der Zeitpunkt des letzten Auftretens der Ereignisart ermittelt (z. B. gemäß dem oben beschriebenen Verfahren). In dem zweiten Diagramm von oben sind der Zeitpunkt des ersten Auftretens und der Zeitpunkt des zweiten Auftretens jeweils durch eine horizontale Linie miteinander verbunden. In anderen Fällen als dem dargestellten kann eine Ereignisart auch nur ein Mal auftreten.

In dem folgenden Schritt 3 wird die Häufigkeit der Ereignisarten ermittelt und werden die einzelnen Ereignisse der Ereignisart einem Wert auf der Zeitachse zugeordnet. Insbesondere können die Ereignisse derselben Ereignisart, wie oben beschrieben, zwischen dem Zeitpunkt des letzten Auftretens und dem Zeitpunkt des ersten Auftretens gleichmäßig verteilt werden. Es ist jedoch auch möglich eine andere Verteilung zwischen dem ersten Auftreten und dem zweiten Auftreten vorzunehmen, beispielsweise wenn weitere Informationen zur Verfügung stehen, z. B. einzelne oder mehrere Zeitstempel der aufgetretenen Ereignisse.

An Stelle diskreter Zeitpunkte können auch für das Auftreten einzelner, mehrerer oder aller Ereignisse Zeitintervalle definiert sein oder ermittelt werden. In diesem Fall kann optional außerdem ermittelt werden oder festgelegt werden, zu welchem Zeitpunkt in dem jeweiligen Zeitintervall das Ereignis aufgetreten ist. Es ist jedoch auch möglich, insbesondere wenn die ZeitinterValle im Vergleich zu den Zeitabständen des Auftretens der Ereignisse kurz sind, eine Gruppierung lediglich auf Basis der Zeitintervalle vorzunehmen und dem Ereignis keinen diskreten Zeitpunkt zuzuordnen.

In dem dritten Diagramm von oben (in Fig. 9) sind die gleichmäßig verteilten Ereignisse dargestellt.

In dem folgenden Schritt 4 werden die Ereignisse in Ereigniscluster gruppiert, wobei z. B. eine maximale Zeitspanne (oder Intervall des Kilometerstandes) definiert ist, innerhalb der alle Ereignisse desselben Ereignisclusters aufgetreten sein müssen.

In dem vierten Diagramm von oben sind die Ergebnisse der Gruppierung erkennbar. Fig. 10 stellt das Ergebnis in Tabellenform dar. In der linken Spalte sind (pro Zeile, d. h. pro Ereigniscluster) die in einem bestimmten Ereigniscluster aufgetretenen Ereignisarten durch ihren Kennbuchstaben A, B, C, D bezeichnet. In der rechten Spalte steht ein entsprechender "transformierter" Zeitstempel T1 bis T6 des jeweiligen Ereignisclusters. Beispielsweise kann ein Zeitwert des Clusters als transformierter Zeitstempel angegeben werden. Der Zeitwert ist z. B. der frühste oder späteste Zeitpunkt des Auftretens eines der Ereignisse in dem Cluster, oder ein Mittelwert der Zeitpunkte aller Ereignisse des Clusters.

## Patentansprüche

1. Verfahren zum Auswerten von Ereignissen, die beim Betrieb eines Fahrzeuges, insbesondere eines Straßen-Kraftfahrzeuges, ermittelt werden, wobei

   - eine Vielzahl der Ereignisse (A, B, C, D) ermittelt wird,
   - Zusatzinformationen (t, v, h) ermittelt werden, die eine Zuordnung der Ereignisse (A, B, C, D) zu einem Zeitpunkt und/oder Zeitraum des Auftretens des Ereignisses (A, B, C, D) ermöglichen,
   - den Ereignissen (A, B, C, D) aus den Zusatzinformationen (t, v, h) der Zeitpunkt und/oder der Zeitraum des Auftretens des Ereignisses (A, B, C, D) zugeordnet wird,
   - die Ereignisse (A, B, C, D) zu Ereignisclustern gruppiert werden, wobei die Ereigniscluster jeweils ein oder mehrere Ereignisse (A, B, C, D) aufweisen, die zeitlich, oder bezüglich einer anderen in Zeitrichtung geordneten Skala, näher beieinander aufgetreten sind als andere Kombinationen von Ereignissen (A, B, C, D).

2. Verfahren nach dem vorhergehenden Anspruch, wobei die zugeordneten Zeitpunkte und/oder Grenzen der zugeordneten Zeiträume aller Ereignisse (A, B, C, D), die in einem der Ereigniscluster gruppiert sind, nicht weiter als um eine vorgegebene Zeitspanne auseinander liegen.

3. Verfahren nach einem der vorhergehenden Ansprüche, wobei die Ereignisse (A, B, C, D) derart zu Ereignisclustern gruppiert werden, dass dieselbe Art von Ereignissen (A, B, C, D) nicht mehr als ein Mal in jedem der Ereignisclustern vorkommt.

4. Verfahren nach dem vorhergehenden Anspruch, wobei ein Ereigniscluster beim Auftreten von mehr als einem Ereignis (A, B, C, D) derselben Art in zwei oder mehrere Ereigniscluster aufgeteilt wird, so dass die zugeordneten Zeitpunkte und/oder Grenzen der zugeordneten Zeiträume aller Ereignisse (A, B, C, D) jedes beliebigen der durch Aufteilung erhaltenen Ereigniscluster, in einer Zeitspanne liegen, die die Zeitspanne der anderen durch Aufteilung erhaltenen Ereigniscluster nicht überlappt.

5. Anordnung zum Auswerten von Ereignissen, die beim Betrieb eines Fahrzeuges, insbesondere eines Straßen-Kraftfahrzeuges, ermittelt werden, wobei die Anordnung Folgendes aufweist:

- eine Ermittlungseinrichtung (1), die ausgestaltet ist, eine Vielzahl der Ereignisse (A, B, C, D) und Zusatzinformationen (t, v, h) zu ermitteln, wobei die Zusatzinformationen (t, v, h) eine Zuordnung der Ereignisse (A, B, C, D) zu einem Zeitpunkt und/oder Zeitraum des Auftretens des Ereignisses (A, B, C, D) ermöglichen,
- eine Auswertungseinrichtung (2), die mit der Ermittlungseinrichtung (1) verbunden ist und ausgestaltet ist, den ermittelten Ereignissen (A, B, C, D) aus den Zusatzinformationen (t, v, h) den Zeitpunkt und/oder den Zeitraum des Auftretens des Ereignisses (A, B, C, D) zuzuordnen,
- eine Gruppierungseinrichtung (3), die mit der Auswertungseinrichtung verbunden ist und die ausgestaltet ist, die Ereignisse (A, B, C, D) zu Ereignisclustern zu gruppieren, wobei die Ereigniscluster jeweils ein oder mehrere Ereignisse (A, B, C, D) aufweisen, die zeitlich, oder bezüglich einer anderen in Zeitrichtung geordneten Skala, näher beieinander aufgetreten sind als andere Kombinationen von Ereignissen (A, B, C, D).

6. Anordnung nach dem vorhergehenden Anspruch, wobei die Ermittlungseinrichtung mit einem Ereignisspeicher (E) verbunden ist, in dem die Ereignisse (A, B, C, D) und die Zusatzinformationen (t, v, h) speicherbar sind.

FIG. 1

FIG. 2

| Ereignis | Zeitstempel | Verlernzähler | Häufigkeit |
|----------|-------------|---------------|------------|
| D | (t1) | v1 | h1 |
| C | (t3) | v2 | h2 |
| B | (t4) | v4 | h3 |
| A | (t2) | v2 | h4 |

Tabelle mit den Ereignissen

# FIG. 3

| Ereignis | Zeitstempel | Verlernzähler | Häufigkeit |
|----------|-------------|---------------|------------|
| D | t1 | v1 | h1 |
| C | (t3) | (v1) | h2 |
| B | t4 | v2 | h3 |
| A | t2 | v1 | h4 |

Tabelle mit den Ereignissen

$V_{min}$  $V_a$

$t_{vmin}$  $t_a$

# FIG. 4

FIG. 5

| Ereignis | Zeitstempel | Verlernzähler | Häufigkeit |
|----------|-------------|---------------|------------|
| D | t1 | v1 | h1 |
| C | t3 | v1 | h2 |
| B | t4 | v2 | h3 |
| A | t2 | v1 | h4 |

Tabelle mit den Ereignissen

$h_e = 3$

$t_e$   $t_{ve}$

$dt_e$

D
C
B
A

Zeit

**FIG. 6**

1  2  3  4  5  6   Ereignisgruppen

D
C
B
A

Ereignisse

$t_a$ und $v_a$   Zeit

| Ereignisgruppe | Ereignisse |
|----------------|------------|
| 1 | A,D |
| 2 | B,C |
| 3 | A,C |
| 4 | A,B,C,D |
| 5 | B |
| 6 | B |

Ereignisse

B   1   1   1   0   1   x
C   0   0   1   1   1   x
D   0   0   1   0   0   1
A   0   0   1   1   0   1

6   5   4   3   2   1   Eingabevektoren

**FIG. 7**

| Ereignis | Zeitstempel | Verlernzähler | Häufigkeit |
|----------|-------------|---------------|------------|
| D | t1 | v1 | h1 |
| C | t3 | v2 | h2 |
| B | t4 | v4 | h3 |
| A | t2 | v2 | h4 |

# FIG. 8

# FIG. 9

| Ereignisgruppe | transformierter Zeitstempel |
|----------------|-----------------------------|
| A B C D | T1 |
| A C | T2 |
| B | T3 |
| A C D | T4 |
| B | T5 |
| B | T6 |

# FIG. 10